## Europäisches Patentamt

## European Patent Office

## Office européen des brevets

(19)

(11) Veröffentlichungsnummer: **0 145 050**
**B1**

(12) **EUROPÄISCHE PATENTSCHRIFT**

(45) Veröffentlichungstag der Patentschrift:
**27.01.88**

(51) Int. Cl.⁴: **H 01 J 29/18**, H 01 J 29/28,
C 09 K 11/77

(21) Anmeldenummer: **84201564.6**

(22) Anmeldetag: **31.10.84**

(54) **Bildwiedergaberöhre.**

(30) Priorität: **03.11.83 NL 8303782**

(73) Patentinhaber: **N.V. Philips' Gloeilampenfabrieken, Groenewoudseweg 1, NL-5621 BA Eindhoven (NL)**

(43) Veröffentlichungstag der Anmeldung:
**19.06.85 Patentblatt 85/25**

(72) Erfinder: **van Koesveld, Jan Louis, p/A INT. OCTROOIBUREAU B.V. Prof. Holstlaan 6, NL-5656 AA Eindhoven (NL)**
Erfinder: **Schuil, Roelof Egbert, p/A INT. OCTROOIBUREAU B.V. Prof. Holstlaan 6, NL-5656 AA Eindhoven (NL)**

(45) Bekanntmachung des Hinweises auf die Patenterteilung:
**27.01.88 Patentblatt 88/4**

(84) Benannte Vertragsstaaten:
**DE FR GB IT NL**

(74) Vertreter: **Koppen, Jan, INTERNATIONAAL OCTROOIBUREAU B.V. Prof. Holstlaan 6, NL-5656 AA Eindhoven (NL)**

(56) Entgegenhaltungen:
**EP - A - 0 018 667**
**FR - A - 2 021 397**
**US - A - 3 638 060**
**US - A - 3 725 704**
**US - A - 3 829 700**
**US - A - 3 883 747**

ACTORUM AG

## Beschreibung

Die Erfindung betrifft eine Bildwiedergaberöhre mit Mitteln zum Erzeugen zumindest eines Elektronenstrahls in einem evakuierten Kolben, wobei der Elektronenstrahl auf einem Bildschirm fokussiert wird und dort ein Raster beschreibt, wobei der Bildschirm einen mit Terbium aktivierten Leuchtstoff auf einem Träger enthält, und wobei das vom Leuchtstoff ausgestrahlte Licht durch ein Filter geht.

Die Bildwiedergaberöhre kann beispielsweise eine Monochrom- oder Mehrfarbenbildröhre, eine Projektionsfernsehbildröhre, eine sog. DGD-Röhre (DGD = Data Graphic Display) oder eine Oszillographenröhre sein. In den meisten Fällen ist der einen Teil des Bildschirms bildende Träger zugleich ein lichtdurchlässiges Fenster im Kolben der Bildwiedergaberöhre. Bei Bildwiedergaberöhren für Projektionsfernsehen kann der Träger auch nicht lichtdurchlässig und mit Kühlmitteln versehen sein. Das Licht tritt in diesem Fall an jener Seite des Bildschirms aus, an der der Elektronenstrahl auftritt, und wird über ein System von Spiegeln durch ein Fenster im Röhrenkolben nach aussen projiziert. Eine Bildwiedergaberöhre eingangs erwähnter Art ist der US-Patentschrift 4 177 399 bekannt, in der ein Bildschirm beschrieben ist, der ein grün emittierendes, mit Terbium aktiviertes Gadoliniumoxysulfid enthält. Auf dem Bildfenster der Röhre ist ein Filter aus grünem Filterglas angebracht, das ein schmales Spektrumband durchlässt, das an die Emission des grünen Leuchtstoffs angepasst ist. Dadurch wird die Übertragung des grünen Bilds optimiert, während Umgebungslicht nahezu nicht durchgelassen wird, wodurch ein besserer Kontrast erhalten wird.

Für die Wiedergabe eines blau gefärbten Bildes wird bisher oft das blau emittierende, mit Silber aktivierte Zinksulfid (ZnS : Ag) verwendet. Dieser Leuchtstoff hat zwar eine hohe Energieausbeute von etwa 20%, weist aber eine starke Sättigung beim Erhöhen der Stomdichte auf. Bei sehr hohen Stomdichten ist die Energieausbeute weniger als 4%. Dadurch eignet sich dieser blaue Leuchtstoff weniger zur Verwendung in Projektionsfernsehbildröhren. Eine Anzahl anderer blauer Leuchtstoffe, z.B. mit Thulium (Tm) und mit Terbium (Tb) aktivierte Leuchtstoffe, haben den Nachteil, dass die Energieausbeute bei hohen Stromdichten zu niedrig und/oder der Farbpunkt falsch ist. Mit Terbium aktivierte blauleuchtende Stoffe, z.B. mit Terbium aktiviertes Yttriumoxysulfid ($Y_2O_2S$ : Tb) und mit Terbium aktiviertes Lanthanoxybromid (LaOBr : Tb), haben keinen richtigen Farbpunkt und insbesondere einen sehr ungesättigten Farbpunkt. So ist beispielsweise in der japanischen Patentanmeldung 58-38783 (Jap. Pat. Kokai) ein mit Terbium (Tb) aktivierter, blau pigmentierter Leuchtstoff beschrieben. Das benutzte Yttriumoxysulfid ($Y_2O_2S$) ist mit 0,001 bis 0,2 Mol.-% Terbium (Tb) aktiviert und mit Kobaltaluminat ($CoAl_2O_4$) als blauem Pigment bedeckt. Bei einer Pigmentkonzentration bis zu 5 Gew.-% tritt eine geringe Farbverbesserung ein, wobei die x- und y-Werte im IEC-Farbdreieck grösser als 0,200 bzw. 0,180 bleiben. Bei grösseren Konzentrationen als 5% tritt ein unerwünschter Ausbeuterückgang auf.

Der Erfindung liegt die Aufgabe zugrunde, eine Bildwiedergaberöhre anzugeben, mit der es möglich ist, bei der Verwendung eines mit Terbium aktivierten Leuchtstoffs ein gutes gesättigtes blaues Bild mit einer zufriedenstellend hohen Energieausbeute wiederzugeben.

Diese Aufgabe wird mit einer Bildwiedergaberöhre der eingangs erwähnten Art erfindungsgemäss dadurch gelöst, dass die Energie der Emissionen des Leuchtstoffs, die ihren Ursprung im $^5D_3$-Niveau des Terbiums haben, zumindest 40% der Energie der Emissionen aller Terbiumniveaus beträgt und das Filter eine Transmission von mehr als 75% bei jenen Wellenlängen hat, bei denen die $^5D_3 \rightarrow {}^7F_5$- und die $^5D_3 \rightarrow {}^7F_4$-Emissionen von Terbium liegen, und das Filter eine Transmission von weniger als 10% bei jenen Wellenlängen hat, bei denen die $^5D_4 \rightarrow {}^7F_5$- und die $^5D_4 \rightarrow {}^7F_4$- und die $^5D_4 \rightarrow {}^7F_3$-Emissionen des Terbiums liegen, so dass der Farbpunkt des gefilterten Lichts im Bereich x $\leqslant$ 0,200 und y $\leqslant$ 0,100 im IEC-Farbdreieck liegt.

Durch das gute Sättigungsverhalten der mit Terbium aktivierten blau-leuchtenden Stoffe weist die Röhre eine bessere Ausbeute als die bisher bekannten Röhren mit blauleuchtenden Stoffen auf. Das breite Terbiumspektrum gibt die Möglichkeit zur Verbesserung des Farbpunkts mit einem Filter. Daneben ist das Verhältnis der $^5D_3$- und $^5D_4$-Emissionen von Terbium vorwiegend von der Terbiumkonzentration und in geringerem Ausmass von der Gitterart des Leuchtstoffs abhängig. Indem nunmehr der Leuchtstoff in der Kombination mit einem Filter nach obiger Angabe gewählt wird, ist es möglich, das Spektrum eines mit Terbium aktivierten Leuchtstoffs mittels des Filters derart zu ändern, dass eine gesättigte blaue Farbe entsteht, ohne dass die Ausbeute zu weit absinkt. Die Energieausbeute der Kombination Leuchtstoff-Filter beträgt etwa 6 bis 12% und der Leuchtstoff ist im Vergleich zu ZnS : Ag mehr linear. Letzteres bedeutet, dass es bei höheren Stromdichten auch eine höhere Ausbeute im Vergleich zu ZnS : Ag gibt.

Das Filter kann überall im Lichtweg zwischen dem ausstrahlenden Leuchtstoff und dem Beobachter angeordnet werden. Es kann beispielsweise in Form einer Schicht zwischen dem Phosphor und einem transparenten Träger angebracht werden. Es ist auch möglich, das Filter an der Aussenseite an oder vor dem Bildfenster anzuordnen. Eine weitere Möglichkeit ist das Anbringen des Filters in Form einer Schicht um die Leuchtstoffkörner oder als Pigmentkörner auf den Leuchtstoffkörnern.

Eine andere bevorzugte Ausführungsform der erfindungsgemässen Bildwiedergaberöhre mit einer guten blauen Farbe und einer hohen Energieausbeute ist dadurch gekennzeichnet, dass der mit Terbium aktivierte Leuchtstoff ein Leuchtstoff auf der Basis von LnOX ist, worin Ln eines oder mehrere der Elemente aus der Gruppe Gadolinium (Gd), Lutetium (Lu), Yttrium (Y) und Lanthan (La) und X eines oder mehrere der Elemente aus der Gruppe Fluor (F), Chlor (Cl), Brom (Br) und Jod (J) ist.

Besondere Eignung hat ein Phosphor auf der Basis von Lanthanoxybromid (LaOBr), wobei die Terbiumkonzentration zwischen 0,07 und 2 Mol.-% in bezug auf das Lanthan ist. Dieser Leuchtstoff hat einen sehr linearen Charakter. Selbstverständlich ist es auch möglich, einen geringen Teil des Lanthans durch einen oder mehreren Stoffe aus der Gruppe Yttrium (Y), Gadolinium (Gd) und Lutetium (Lu) und einen geringen Teil des Broms (Br) durch einen oder mehrere Stoffe aus der Gruppe Chlor (Cl), Fluor (F) und Jod (J) zu ersetzen.

Eine andere Ausführungsform einer erfindungsgemässen Bildwiedergaberöhre ebenfalls mit einer guten Farbe und einer ausreichend hohen Energieausbeute ist dadurch gekennzeichnet, dass der mit Terbium aktivierte Leuchtstoff ein Leuchtstoff auf der Basis von Yttriumoxysulfid ($Y_2O_2S$) ist und die Terbiumkonzentration (Tb) zwischen 0,05 und 1 Mol.-% in bezug auf Yttrium (Y) beträgt. Es ist möglich, einen geringen Teil des Yttriums (Y) durch einen oder mehrere Stoffe aus der Gruppe Lanthan (La), Gadolinium (Gd) und Lutetium (Lu) zu ersetzen.

Die Transmission des Filters ist vorzugsweise dadurch gekennzeichnet, dass das Filter eine Transmission von mehr als 75% für Licht mit einer Wellenlänge zwischen 410 und 420 nm und zwischen 435 und 445 nm besitzt, dass die Transmission des Filters zwischen 445 und 530 nm auf weniger als 15% bei 530 nm abnimmt, und dass das Filter eine Transmission von weniger als 10% zwischen 540 und 560 nm, zwischen 580 und 600 nm und zwischen 610 und 630 nm hat. Wenn ausserdem die Transmission des Filters zwischen 445 und 530 nm auf weniger als 10% bei 530 nm abnimmt, bekommt man eine tiefere blaue Farbe mit niedrigeren x- und y-Werten im IEC-Farbdreieck. Wenn ausserdem das Filter eine Transmission von weniger als 5% zwischen 540 und 560 nm hat, wird eine noch tiefere blaue Farbe erhalten.

Einige Ausführungsbeispiele der Erfindung werden nachstehend anhand der Zeichnung näher erläutert. Es zeigen

Fig. 1 einen schematischen Längsschnitt durch eine erfindungsgemässe Bildwiedergaberöhre,

Fig. 2a ein IEC-Farbdreieck und

Fig. 2b einen Ausschnitt dieses Dreiecks,

Fig. 3 die spektrale Energieverteilung eines ersten Leuchtstoffs für eine erfindungsgemässe Bildwiedergaberöhre,

Fig. 4 die spektrale Energieverteilung eines zweiten Leuchtstoffs für eine erfindungsgemässe Bildwiedergaberöhre,

Fig. 5 die Transmissionskennlinie eines ersten Filters für die erfindungsgemässe Bildwiedergaberöhre,

Fig. 6 die Transmissionskennlinie eines zweiten Filters für eine erfindungsgemässe Bildwiedergaberöhre,

Fig. 7 ein Spektrum des Lichts des Leuchtstoffs, dessen Spektrum in Fig. 3 dargestellt ist, nachdem es ein Filter mit einer Transmissionskennlinie nach Fig. 5 passiert hat,

Fig. 8 ein Spektrum des Leuchtstofflichts, dessen Spektrum in Fig. 3 dargestellt ist, nachdem es ein Filter mit einer Transmissionskennlinie nach Fig. 6 passiert hat,

Fig. 9 ein Spektrum des Leuchtstofflichts, dessen Spektrum in Fig. 4 dargestellt ist, nachdem es ein Filter mit einer Transmissionskennlinie nach Fig. 5 passiert hat, und

Fig. 10 ein Spektrum des Leuchtstofflichts, dessen Spektrum in Fig. 4 dargestellt ist, nachdem es ein Filter mit einer Transmissionskennlinie nach Fig. 6 passiert hat.

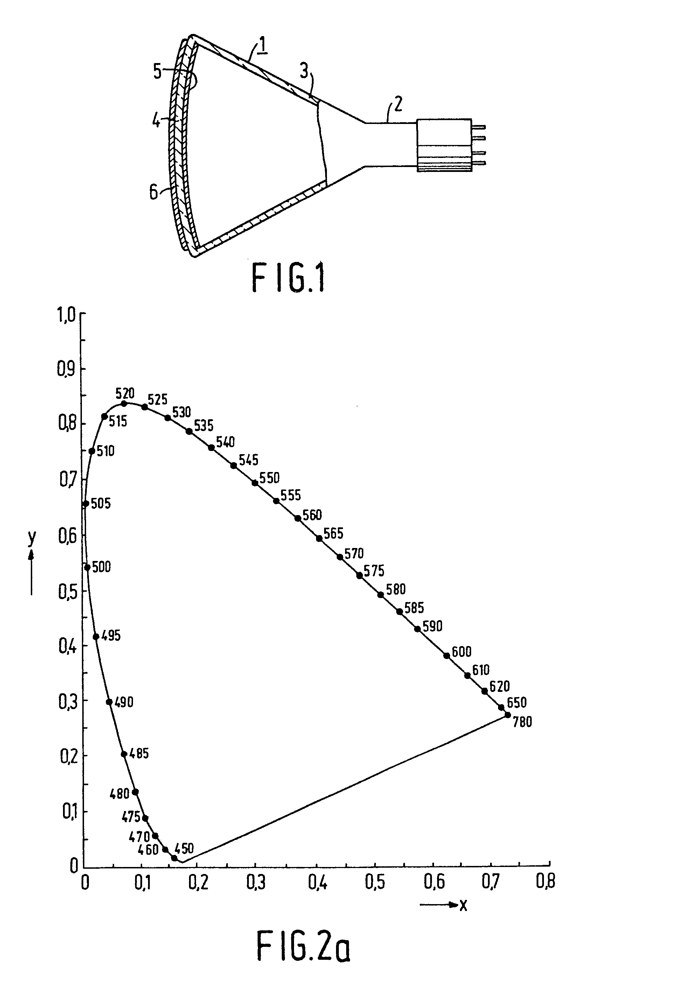

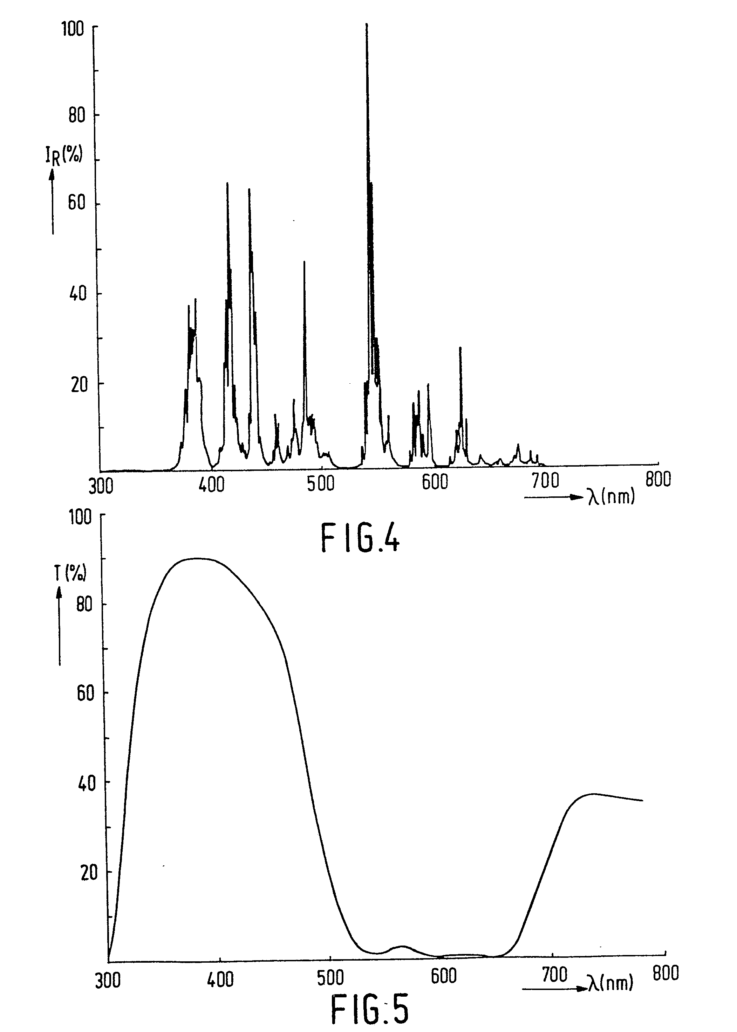

In Fig. 1 ist schematisch ein Längsschnitt durch eine erfindungsgemässe Bildwiedergaberöhre dargestellt. Diese Bildwiedergaberöhre enthält einen evakuieren Kolben 1 mit einem Hals 2, einem Konus 3 und einem Bildfenster 4. Dieses Bildfenster 4 ist an der Innenseite mit einem Bildschirm 5 ausgerüstet, der einen terbiumaktivierten Leuchtstoff enthält. Die Terbiumkonzentration ist derart gewählt, dass die Energie der Emissionen, die ihren Ursprung im $^5D_3$-Niveau von Terbium haben, zumindest 40% der Energie der Emissionen aller Terbiumniveaus beträgt. Bei einem niedrigeren Prozentsatz ist der Leuchtstoff durch die zu niedrige Ausbeute an blauer Strahlung zur Verwendung als blauer Leuchtstoff weniger interessant. An der Aussenseite des Bildfensters ist ein Filter 6 angeordnet, dessen Transmissionskennlinie in Fig. 5 dargestellt ist. Sehr gute Verwendbarkeit zeigen einige Filter der Firma Schott, wie z.B. die Typen BG25 und 37.

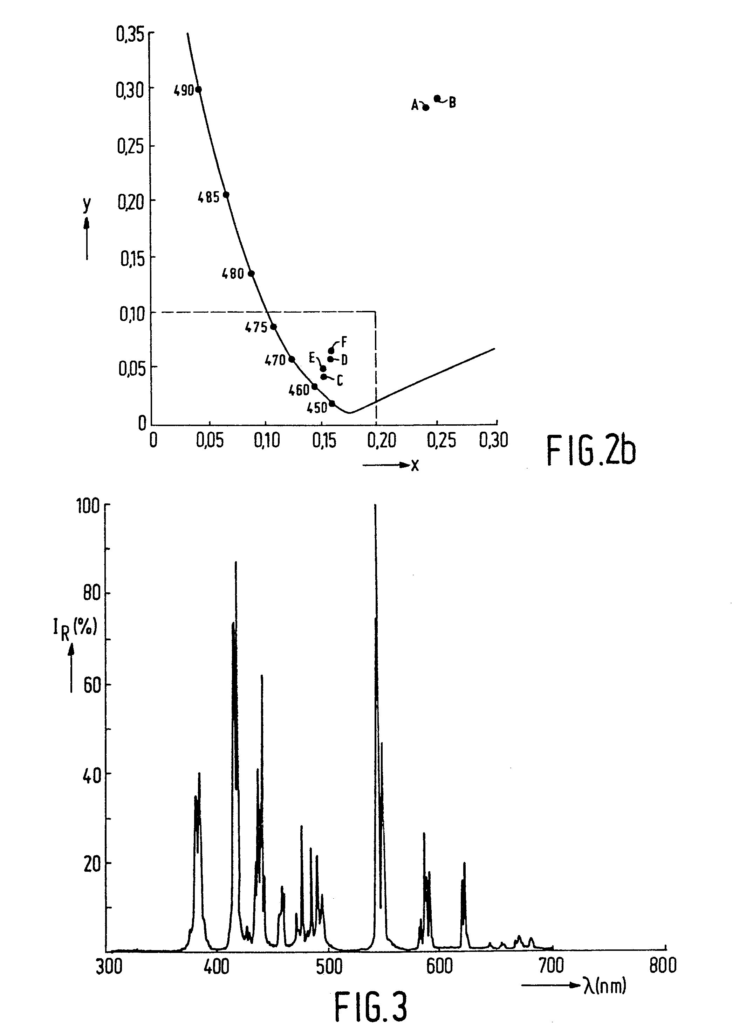

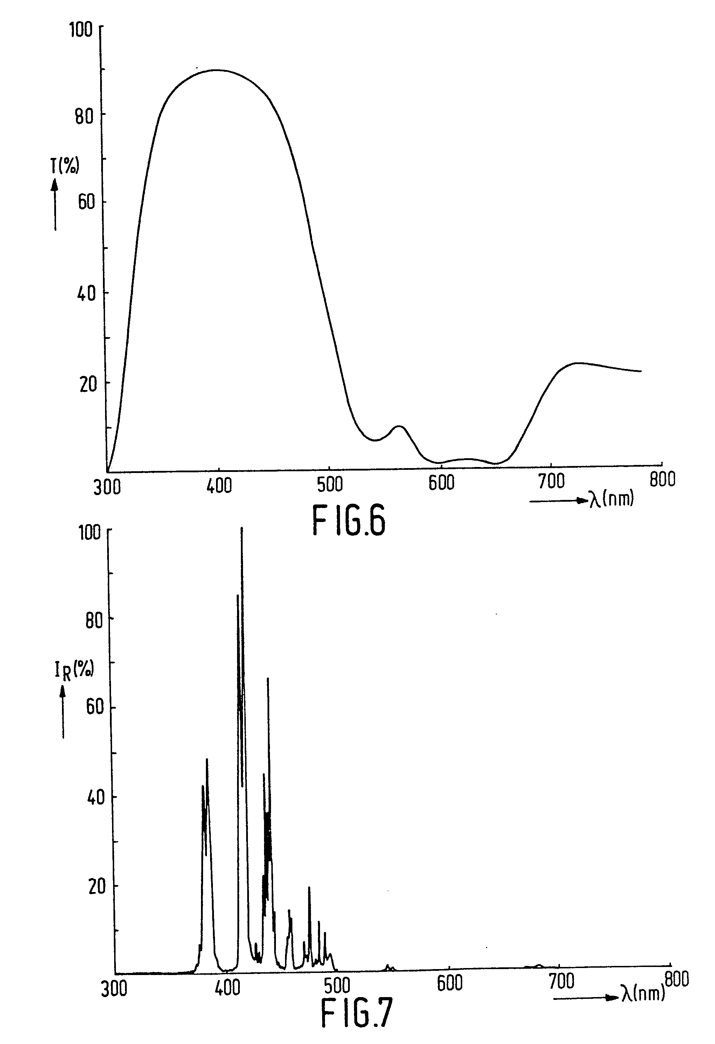

In Fig. 2a ist das IEC-Farbdreieck dargestellt. In Fig. 2b ist ein Teil dieses Dreiecks dargestellt, in dem die Farbpunkte A und B zweier Leuchtstoffe angegeben sind, die anhand der Fig. 3 und 4 näher erläutert werden. Auch sind die Farbpunkte C, D, E und F dieser Leuchtstoffe in der Kombination mit den Filtern nach Fig. 5 und 6 in dem durch gestrichelte Linien begrenzten Gebiet angegeben (x ≤ 0,2, y ≤ 0,1).

In Fig. 3 ist die spektrale Energieverteilung von terbiumaktiviertem $Y_2O_2S$ dargestellt, das 0,3 Mol.-% Terbium in bezug auf Y enthält. Die Lage der Energieniveaus vom $Tb^{3+}$ ist u.a. aus J. Chem. Phys. 38 (1963), S. 2171, bekannt. Die auf den Wert des höchsten Maximums bezogene Intensität, die relative Intensität $I_R$, ist abhängig von der Wellenlänge dargestellt. Die x- und y-Werte dieses Leuchtstoffs im IEC-Farbdreieck betragen 0,249 bzw. 0,287. Es ist der Punkt A in Fig. 2b. Die Ernegieausbeute dieses Leuchtstoffs ist dabei grösser als 13%.

In Fig. 4 ist auf ähnliche Weise die spektrale Energieverteilung von terbiumaktiviertem LaOBr dargestellt, das 0,5 Mol.-% Tb in bezug auf La enthält. Die x- und y-Werte dieses Leuchtstoffs im IEC-Farbdreieck betragen 0,255 bzw. 0,290. Es ist der Punkt B in Fig. 2b. Die Energieausbeute dieses Leuchtstoffs ist grösser als 12%.

In Fig. 5 und 6 sind die Transmissionskennlinien der jeweiligen Filter BG25 und BG37 der Firma Schott dargestellt, wobei die Filter eine Dicke von 1 mm besitzen. Diese Filter genügen den gestellten Bedingungen. Die Transmission T (in %) ist abhängig von der Wellenlänge wiedergegeben.

In Fig. 7 ist die spektrale Energieverteilung dargestellt, die entsteht, nachdem das Leuchtstofflicht mit dem Spektrum nach Fig. 3 durch ein Filter mit der Transmissionskennlinie nach Fig. 5 gegangen ist. Die zu dieser Filter-Leuchtstoffkombination nach der Erfindung gehörenden x- und y-Werte sind 0,157 bzw. 0,035, also tiefblau. Es ist der Punkt C in Fig. 2b. Die Energieausbeute dieser Kombination ist grösser als 7,7%.

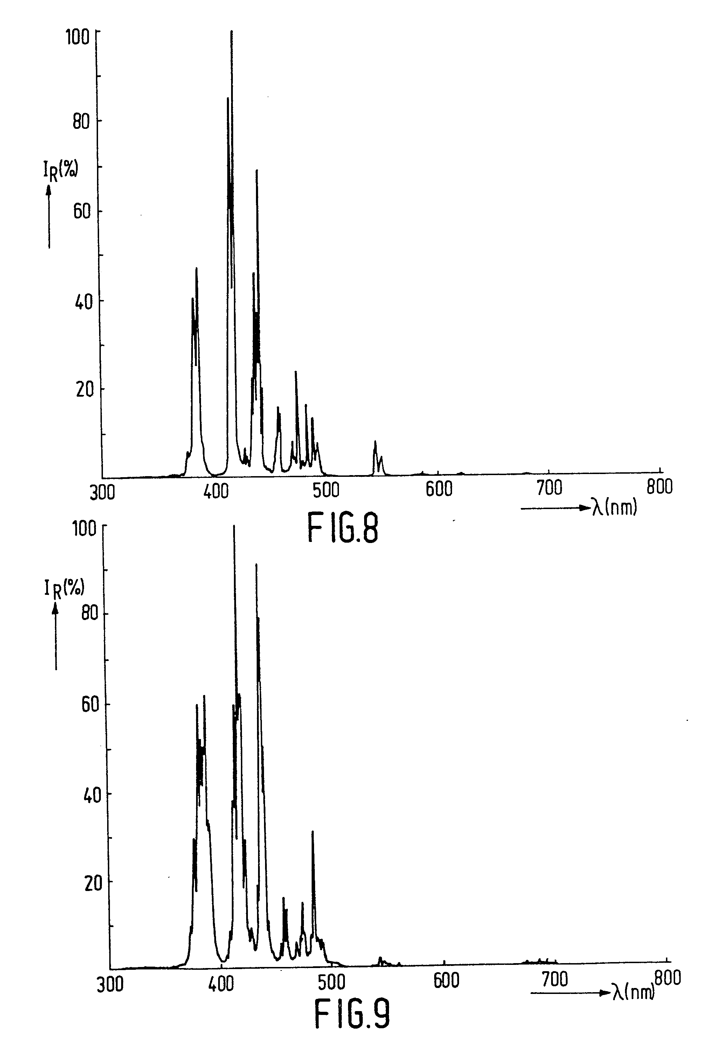

In Fig. 8 ist die spektrale Energieverteilung dargestellt, die sich ergibt, nachdem das Leuchtstofflicht mit dem Spektrum nach Fig. 3 durch ein Filter mit der Transmissionskennlinie nach Fig. 6 gegangen ist. Die zu dieser Filter-Leuchtstoffkombination gehörenden x- und y-Werte betragen 0,161 bzw. 0,065. Es ist der Punkt D in Fig. 2b. Die Energieausbeute dieser Kombination ist grösser als 8,5%.

In Fig. 9 ist die spektrale Energieverteilung dargestellt, die entsteht, nachdem das Leuchtstofflicht mit dem Spektrum nach Fig. 4 durch ein Filter mit der Transmissionskennlinie nach Fig. 5 gegangen ist. Die zu dieser Filter-Leuchtstoffkombination gehörenden x- und y-Werte sind 0,157 bzw. 0,038. Es ist der Punkt E in Fig. 2a. Die Energieausbeute dieser Kombination ist grösser als 6%.

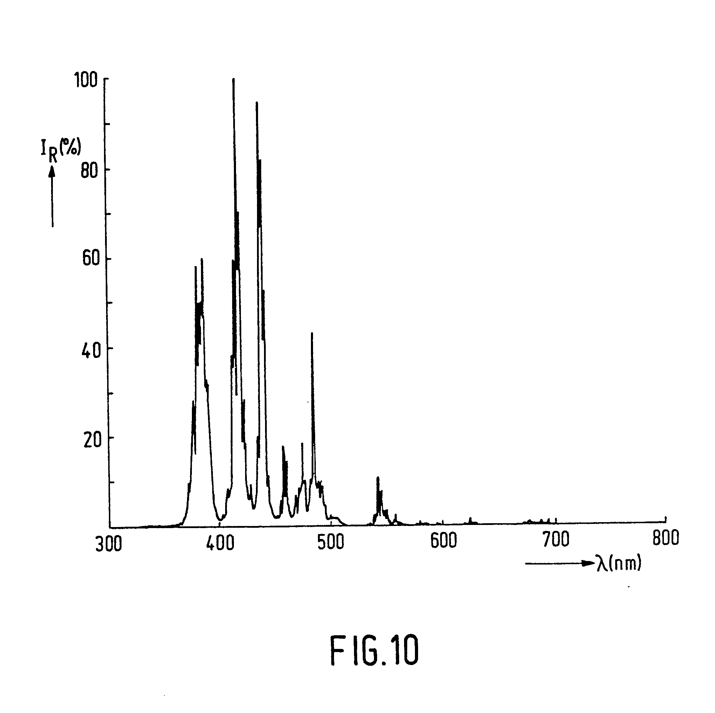

In Fig. 10 ist die spektrale Energieverteilung dargestellt, die entsteht, nachdem das Leuchtstofflicht mit dem Spektrum nach Fig. 4 durch ein Filter mit der Transmissionskennlinie nach Fig. 6 gegangen ist. Die zu dieser Filter-Leuchtstoffkombination gehörenden x- und y-Werte sind 0,161 bzw. 0,069. Es ist der Punkt F in Fig. 2b. Die Energieausbeute dieser Kombination ist grösser als 6,5%.

Aus den Fig. 7 bis 10 ist ersichtlich, dass es durch die Kombination geeigneter, mit Tarbium aktivierter Leuchtstoffe mit geeigneten Filtern möglich ist, ein gutes gesättigtes blaues Bild mit einer akzeptablen bis guten Energieausbeute wiederzugeben.

**Patentansprüche**

1. Bildwiedergaberöhre mit Mitteln zum Erzeugen zumindest eines Elektronenstrahls in einem evakuierten Kolben, wobei der Elektronenstrahl auf einem Bildschirm fokussiert wird und darauf ein Raster beschreibt, wobei der Bildschirm einen mit Terbium aktivierten Leuchtstoff auf einem Träger enthält, und wobei das vom Leuchtstoff emittierte Licht durch ein Filter fällt, dadurch gekennzeichnet, dass die Energie der Emissionen des Leuchtstoffs, die ihren Ursprung im $^5D_3$-Niveau des Terbiums haben, zumindest 40% der Energie der Emissionen aller Terbiumniveaus beträgt und das Filter eine Transmission von mehr als 75% bei jenen Wellenlängen hat, bei denen die $^5D_3 \rightarrow {}^7F_5$- und die $^5D_3 \rightarrow {}^7F_4$-Emissionen von Terbium liegen, und das Filter eine Transmission von weniger als 10% bei jenen Wellenlängen hat, bei denen die $^5D_4 \rightarrow {}^7F_5$- und die $^5D_4 \rightarrow {}^7F_4$- und die $^5D_4 \rightarrow {}^7F_3$-Emissionen von Terbium liegen, so dass der Farbpunkt des gefilterten Lichts im Bereich x $\leqslant$ 0,200 und y $\leqslant$ 0,100 im IEC-Farbdreieck liegt.

2. Bildwiedergaberöhre nach Anspruch 1, dadurch gekennzeichnet, dass der mit Terbium aktivierte Leuchtstoff ein Leuchtstoff auf der Basis von LnOX ist, worin Ln eines oder mehrere der Elemente aus der Gruppe Gadolinium (Gd), Lutetium (Lu), Yttrium (Y) und Lanthan (La) ist und X eines oder mehrere der Elemente aus der Gruppe Fluor (F), Chlor (Cl), Brom (Br) und Jod (J) ist.

3. Bildwiedergaberöhre nach Anspruch 2, dadurch gekennzeichnet, dass der mit Terbium aktivierte Leuchtstoff ein Leuchtstoff auf der Basis von Lanthanoxybromid (LaOBr) ist und die Terbiumkonzentration (Tb) zwischen 0,07 und 2 Mol.-% in bezug auf das Lanthan (La) ist.

4. Bildwiedergaberöhre nach Anspruch 1, dadurch gekennzeichnet, dass der mit Terbium aktivierte Leuchtstoff ein Leuchtstoff auf der Basis von Yttriumoxysulfid ($Y_2O_2S$) ist und die Terbiumkonzentration (Tb) zwischen 0,05 und 1 Mol.-% in bezug auf das Yttrium (Y) ist.

5. Bildwiedergaberöhre nach einem der Ansprüche 1, 2, 3 oder 4, dadurch gekennzeichnet, dass das Filter eine Transmission von mehr als 75% für Licht mit einer Wellenlänge zwischen 410 und 420 nm und zwischen 435 und 445 nm hat, dass die Transmission des Filters zwischen 445 und 530 nm auf weniger als 15% bei 530 nm abnimmt und dass das Filter eine Transmission von weniger als 10% zwischen 540 und 560 nm zwischen 580 und 600 nm und zwischen 610 und 630 nm hat.

6. Bildwiedergaberöhre nach Anspruch 5, dadurch gekennzeichnet, dass die Transmission des Filters zwischen 445 und 530 nm auf weniger als 10% bei 530 nm abnimmt.

7. Bildwiedergaberöhre nach Anspruch 5 oder 6, dadurch gekennzeichnet, dass das Filter eine Transmission von weniger als 5% zwischen 540 und 560 nm hat.

8. Bildwiedergaberöhre nach einem der vorangehenden Ansprüche, dadurch gekennzeichnet, dass sie eine Projektionsfernsehbildröhre ist.

**Claims**

1. A display tube comprising in an evacuated envelope means to generate at least one electron beam which is focused on a display screen and describes a field thereon, which display screen comprises a terbium-activated phosphor on a carrier, and in which the light emitted by the phosphor falls through a filter, characterized in that the energy of the emissions of the phosphor which find their origin in the $^5D_3$-level of terbium, is at least 40% of the energy of the emissions of all terbium levels and the filter has a transmission of more than 75% at those wavelengths where the $^5D_3 \rightarrow {}^7F_5$ and the $^5D_3 \rightarrow {}^7F_4$ emissions of terbium are located and the filter has a transmission of less than 10% at those wavelengths where the $^5D_4 \rightarrow {}^7F_5$ and the $^5D_4 \rightarrow {}^7F_4$ and the $^5D_4 \rightarrow {}^7F_3$ emissions of terbium are located so that the colour point of the filtered light is located in the range x $\leqslant$ 0.200 and y $\leqslant$ 0.100 in the CIE colour triangle.

2. A display tube as claimed in claim 1, characterized in that the terbium-activated phosphor is a phosphor on the basis of LnOX, wherein Ln is one or more of the elements from the group of gadolinium (Gd), lutetium (Lu), yttrium (Y) and lanthanum (La) and X is one or more of the elements from the group of fluorine (F), chlorine (Cl), bromine (Br) and iodine (I).

3. A display tube as claimed in claim 2, characterized in that the terbium-activated phosphor is a phosphor on the basis of lanthanum oxybromide (LaOBr) and the terbium (Tb) concentration is between 0.07 and 2 mol% with respect to the lanthanum (La).

4. A display tube as claimed in claim 1, characterized in that terbium-activated phosphor is a phosphor on the basis of yttrium oxysulphide ($Y_2O_2S$) and the terbium (Tb) concentration is between 0.05 and 1 mol% with respect to the yttrium (Y).

5. A display tube as claimed in any of the claims 1, 2, 3 or 4, characterized in that the filter has a transmission of more than 75% for light having a wavelength between 410 and 420 nm and between 435 and 445 nm, the transmission of the filter decreases between 445 and 530 nm to smaller than 15% at 530 nm, and the filter has a transmission of less than 10% between 540 and 560 nm, between 580 and 600 nm and between 610 and 630 nm.

6. A display tube as claimed in claim 5, characterized in that the transmission of the filter decreases between 445 and 530 nm to smaller than 10% at 530 nm.

7. A display tube as claimed in claim 5 or 6, characterized in that the filter has a transmission of less than 5% between 540 and 560 nm.

8. A display tube as claimed in any preceding claim, characterized in that it is a projection television display tube.

## Revendications

1. Tube de reproduction d'images muni de moyens pour obtenir au moins un faisceau d'électrons dans une ampoule dans laquelle le vide a été fait. Ce faisceau d'électrons étant focalisé sur un écran image pour y décrire une trame tandis que l'écran image trame est muni d'une substance luminescente activée à l'aide de terbium et appliquée sur un support et que la lumière émise par la substance luminescente traverse un filtre, caractérisé en ce que l'énergie des émissions de la substance luminescente, dont l'origine se situe au niveau $^5D_3$ du terbium, est d'au moins 40% de l'énergie des émissions de tous les niveaux du terbium et que le filtre présente une transmission supérieure à 75% aux longueurs d'onde où se situent les émissions $^5D_3 \rightarrow {}^7F_5$ et $^5D_3 \rightarrow {}^7F_4$ du terbium et que le filtre présente une transmission inférieure à 10% aux longueurs d'onde auxquelles se situent $^5D_4 \rightarrow {}^7F_5$ et $^5D_4 \rightarrow {}^7F_4$ et $^5D_4 \rightarrow {}^7F_3$ du terbium de sorte que le point chromatique de la lumière filtrée se situe dans la gamme $x \leqslant 0,200$ et $y \leqslant 0,100$ dans le triangle des couleurs selon IEC.

2. Tube de reproduction d'images selon la revendication 1, caractérisé en ce que la substance luminescente activée à l'aide de terbium est une substance luminescente à base de LnOX, Ln étant un ou plusieurs des éléments du groupe de gadolinium (Gd), lutétium (Lu), yttrium (Y) et lanthane (La) et X étant un ou plusieurs des éléments du groupe de fluor (F), chlore (Cl), brome (Br) et iode (I).

3. Tube de reproduction d'images selon la revendication 2, caractérisé en ce que la substance luminescente activée à l'aide de terbium est une substance luminescente à base d'oxybromure de lanthane (LaOBr) et que la concentration en terbium (Tb) est comprise entre 0,07 et 2% en moles, rapportée au lanthane (La).

4. Tube de reproduction d'images selon la revendication 1, caractérisé en ce que la substance luminescente activée à l'aide de terbium est une substance luminescente à base d'oxysulfure d'yttrium ($Y_2O_2S$) et que la concentration en terbium (Tb) est comprise entre 0,05 et 1% en moles, rapportée à l'yttrium (Y).

5. Tube de reproduction d'images selon l'une des revendications 1, 2, 3 ou 4, caractérisé en ce que le filtre présente une transmission supérieure à 75% pour la lumière présentant une longueur d'onde comprise entre 410 et 420 nm et entre 435 et 445 nm, que la transmission du filtre entre 445 et 530 nm diminue jusqu'à moins de 15% à 530 nm et que le filtre représente une transmission inférieure à 10% entre 540 et 560 nm, entre 580 et 600 nm et entre 610 et 630 nm.

6. Tube de reproduction d'images selon la revendication 5, caractérisé en ce que la transmission du filtre entre 445 et 530 nm diminue jusqu'à moins de 10% à 530 nm.

7. Tube de reproduction d'images selon la revendication 5 ou 6, caractérisé en ce que le filtre présente une transmission inférieure à 5% entre 540 et 560 nm.

8. Tube de reproduction d'images selon l'une des revendications précédentes, caractérisé en ce qu'il est un tube d'images de télévision à projection.

FIG.1

FIG.2a

FIG.2b

FIG.3

FIG.4

FIG.5

FIG.6

FIG.7

FIG.8

FIG.9

FIG.10